# DEMANDE DE BREVET EUROPEEN

(11) **EP 1 727 060 A1**
(43) Date de publication de la demande: **29.11.2006**
(21) Numéro de dépôt: 06113892.1
(22) Date de dépôt: 12.05.2006
(51) Int. Cl.: G06F 17/30

(54) **Procédé et dispositif de construction et d'utilisation d'une table de profils réduits de parangons, produit programme d'ordinateur correspondant**

(30) Priorité: 27.05.2005 FR 0505412
(71) Demandeur: FRANCE TELECOM, 75015 Paris (FR)
(72) Inventeur: Feraud, Raphaël, 22700 Perros Guirec (FR); Clerot, Fabrice, 22700 Louannec (FR); Boulle, Marc, 22730 Tregastel (FR); Le Cam, Aurélie, 22300 Lannion (FR)
(74) Mandataire: Guéné, Patrick Lucien Juan Joseph

(57) **Abrégé**

L'invention concerne un procédé de construction et d'utilisation d'une table de profils réduits de parangons (48), permettant de résumer une table de profils d'un ensemble d'individus, tous les profils étant définis par un même ensemble d'indicateurs, le profil d'un individu donné comprenant des valeurs pour ledit ensemble d'indicateurs qui sont propres audit individu donné. Le procédé selon l'invention comprend les étapes suivantes : sélection (45) parmi l'ensemble d'indicateurs d'un sous-ensemble d'indicateurs définissant des profils réduits d'individus, le profil réduit d'un individu donné comprenant des valeurs pour ledit sous-ensemble d'indicateurs qui sont propres audit individu donné et obtenues à partir des données d'un entrepôt de données ; échantillonnage (46) de l'ensemble d'individus, permettant d'obtenir un échantillon d'individus appelés parangons ; obtention d'une table de profils réduits de parangons (48), comprenant pour chacun des parangons un profil réduit spécifique audit parangon ; et indexation (47) de tous les individus sur les parangons, permettant d'obtenir un index reliant chaque individu à au moins un parangon dont le profil réduit est le plus proche du profil réduit dudit individu, de façon que le contenu de la table de profils réduits de parangons puisse être utilisé pour tous les individus.

## Description

### 1. Domaine de l'invention

L'invention se situe dans le domaine de l'informatique décisionnelle (« Business Intelligence » en anglais) et plus spécifiquement dans le domaine de la fouille de données (« data mining » en anglais).

La fouille de données permet de transformer les différentes sources de données d'une entreprise (données clients, données trafic, données textuelles, données multimédia...) en une connaissance exploitable. En d'autres termes, l'exploration de données recouvre l'ensemble des techniques permettant d'enrichir et d'exploiter les données de l'entreprise pour atteindre un objectif opérationnel. Les modèles produisent des scores et/ou des segments à partir des profils des individus. Un score est défmi comme le résultat d'un modèle visant à prévoir, estimer, une caractéristique d'un client, telle que la fidélité, l'appétence... Un segment est défini comme un ensemble d'individus ayant des comportements, des caractéristiques similaires.

Le profil d'un individu est un ensemble d'indicateurs (commun aux profils de tous les individus de la population concernée), dont les valeurs sont calculées à partir des données de détails d'un entrepôt de données (« data warehouse » en anglais), et permettant de caractériser un individu.

Par individu, on entend par exemple un client, un produit, une communication, une transaction, une adresse IP...ou plus généralement tout élément qui peut être traité comme une unité indépendante ou un membre d'une catégorie particulière, et à propos duquel des données peuvent être stockées.

Plus précisément, l'invention concerne une technique de construction et utilisation d'une table de profils réduits de parangons, permettant de résumer une table de profils d'un ensemble d'individus.

On entend par parangon un individu dont le comportement, les caractéristiques sont représentatives d'un ensemble d'individus.

On appelle profil réduit, ou encore signature, un sous-ensemble d'indicateurs du profil dédiés à un domaine métier particulier : fidélisation, appétence ADSL, dimensionnement d'un réseau de Télécoms...

L'invention s'applique notamment, mais non exclusivement, au déploiement de modèles construits à partir de plusieurs dizaines de milliers d'indicateurs, sur des dizaines de millions d'individus.

### 2. Art antérieur

Les données provenant du système d'information d'une entreprise sont consolidées dans des entrepôts de données (« data warehouse »). Des profils sont ensuite calculés à partir des données de détails pour caractériser les clients, les produits, les transactions...

Les techniques de fouille de données (« data mining ») permettent d'extraire de ces profils des éléments objectifs et quantitatifs, comme par exemple l'appétence à un service. Pour construire et déployer les scores, la technique habituelle comporte deux étapes :
Etape 1 : On tire un échantillon d'individus de l'entrepôt de données (base de données). On construit un profil pour chaque individu à partir des données de détails contenues dans la base de données. Le modèle prédictif est construit à partir des profils des individus de l'échantillon. Plus l'échantillon est important plus le modèle sera précis, mais plus il sera coûteux à construire en temps et en ressources informatiques.
Etape 2 : Le modèle obtenu doit ensuite être appliqué séquentiellement au profil de chaque individu pour calculer son score. Si bien que pour déployer un modèle, il faut construire et alimenter un mini-entrepôt (« datamart » en anglais) correspondant à la table de profils de tous les individus.

Un inconvénient de la technique connue est que l'étape 2 est évidement très coûteuse, puisqu'il s'agit d'un projet informatique à part entière.

Un autre inconvénient de la technique connue est que le système est très peu évolutif puisque chaque rajout ou changement d'indicateurs implique de modifier toute l'alimentation du mini-entrepôt.

Encore un autre inconvénient de la technique connue est qu'elle limite l'inflation de la taille des profils, alors que plus les profils sont riches en informations, plus la connaissance sur les objets étudiés sera importante et plus les modèles produisant les scores seront performants. En effet, les modèles doivent être déployés dans le SI (Système d'Information) pour que les scores soient exploitables par d'autres applications. Mais plus le nombre d'indicateurs constituant les profils est important, plus ce déploiement est coûteux en terme d'architecture technique et de maintenance.

### 3. Objectifs de l'invention

L'invention a notamment pour objectif de pallier ces différents inconvénients de l'état de la technique.

Plus précisément, l'un des objectifs de la présente invention, dans au moins un mode de réalisation, est de fournir une technique de fouille de données (« data mining ») permettant de simplifier et donc diminuer les coûts des opérations de stockage et de manipulation des données, de mise au point et de déploiement des modèles.

L'invention a également pour objectif, dans au moins un mode de réalisation, de fournir une telle technique ne nécessitant pas la construction et l'alimentation d'un mini-entrepôt (« datamart ») contenant une table de profils de tous les individus.

Un autre objectif de l'invention, dans au moins un mode de réalisation, est de fournir une telle technique qui permette d'obtenir un système très évolutif et très peu coûteux à maintenir en comparaison d'un mini-entrepôt (« datamart ») classique correspondant à une table de profils de tous les individus.

### 4. Exposé de l'invention

Ces différents objectifs, ainsi que d'autres qui apparaîtront par la suite, sont atteints selon l'invention à l'aide d'un procédé de construction et d'utilisation d'une table de profils réduits de parangons, permettant de résumer une table de profils d'un ensemble d'individus, tous les profils étant définis par un même ensemble d'indicateurs, le profil d'un individu donné comprenant des valeurs pour ledit ensemble d'indicateurs qui sont propres audit individu donné, ledit procédé comprenant les étapes suivantes :
- sélection parmi l'ensemble d'indicateurs d'un sous-ensemble d'indicateurs définissant des profils réduits d'individus, le profil réduit d'un individu donné comprenant des valeurs pour ledit sous-ensemble d'indicateurs qui sont propres audit individu donné et obtenues à partir des données d'un entrepôt de données ;
- échantillonnage de l'ensemble d'individus, permettant d'obtenir un échantillon d'individus appelés parangons ;
- obtention d'une table de profils réduits de parangons, comprenant pour chacun des parangons un profil réduit spécifique audit parangon ; et
- indexation de tous les individus sur les parangons, permettant d'obtenir un index reliant chaque individu à au moins un parangon dont le profil réduit est le plus proche du profil réduit dudit individu, de façon que le contenu de la table de profils réduits de parangons puisse être utilisé pour tous les individus.

Il existe de nombreuses méthodes permettant de sélectionner des variables, d'échantillonner ou d'indexer. L'originalité de l'approche selon l'invention est la combinaison de ces algorithmes de sélection, échantillonnage et indexation pour produire une table de profils réduits (signatures) de parangons résumant la table complète des profils, et reliée dynamiquement à elle. Ainsi, comme détaillé ci-après, chaque score et/ou segment produit sur les parangons est généralisable à tous les individus. La technique de l'invention permet de traiter une volumétrie potentiellement immense (la table complète des profils) sur un volume très réduit (la table des profils réduits des parangons).

Le principe général de l'invention consiste à extraire d'un entrepôt de données une table de profils réduits de parangons, constituée des seuls indicateurs pertinents et des individus (clients, produits, transactions...) les plus représentatifs. Cette table de profils réduits de parangons est reliée à la base complète par un index maintenu automatiquement.

La technique de l'invention présente de nombreux avantages sur la technique standard :
- en travaillant sur une table de profils réduits de parangons, et non pas sur un mini-entrepôt (« datamart ») correspondant à une table de profils de tous les individus, la technique de l'invention permet de réduire les coûts de déploiement, de stockage, de manipulation des données ;
- la table des parangons est plus petite d'un facteur 1000 par rapport au mini-entrepôt (« datamart ») standard correspondant à une table de profils de tous les individus, le coût de stockage et d'alimentation est diminué d'autant ;
- contrairement à un échantillon classique, les parangons sont liés aux individus qu'ils représentent, si bien que le déploiement d'un modèle consiste ici en une simple jointure ;
- les parangons, étant des individus réels, ils évoluent naturellement et permettent d'être représentatifs de la population dans le temps ;
- la table des parangons est générée automatiquement à partir de l'entrepôt de données, si bien que le système est très évolutif et très peu coûteux à maintenir en comparaison d'un mini-entrepôt (« datamart ») classique correspondant à une table de profils de tous les individus.

De façon avantageuse, l'étape d'échantillonnage est effectuée en fonction du résultat de l'étape de sélection, de façon que les parangons soient représentatifs de tous les individus sur ledit sous-ensemble d'indicateurs.

Dans un premier mode de réalisation particulier de l'invention, l'étape de sélection d'un sous-ensemble d'indicateurs comprend une étape d'obtention d'une liste prédéterminée d'indicateurs présélectionnés.

Ainsi, les indicateurs (aussi appelés variables ou attributs) caractérisant la table de profils réduits de parangons peuvent être sélectionnés à l'avance en fonction d'un objectif métier. Ceci permet de construire un échantillon représentatif sur les variables utiles pour l'objectif fixé.

On notera que dans ce premier mode de réalisation, on n'utilise pas de variable cible. Ceci correspond par exemple à une méthodologie du type permettant d'obtenir des segments (analyse exploratoire).

Dans un second mode de réalisation particulier de l'invention, l'étape de sélection d'un sous-ensemble d'indicateurs comprend une étape de calcul du sous-ensemble d'indicateurs en fonction d'au moins un indicateur cible déterminé.

En d'autres termes, on utilise une ou plusieurs variables cibles. Ceci correspond par exemple à une méthodologie du type permettant d'obtenir des scores ou à une méthodologie du type permettant d'obtenir des segments (analyse exploratoire).

De façon avantageuse, le procédé comprend en outre une étape de construction d'au moins un modèle d'analyse basé sur la table de profils réduits de parangons.

Avantageusement, le procédé comprend en outre une étape de déploiement d'un modèle d'analyse, comprenant elle-même les étapes suivantes :
- obtention de scores et/ou segments pour les parangons, à partir de la table de profils réduits de parangons ;
- généralisation à tous les individus des scores et/ou segments obtenus pour les parangons, grâce audit index.

De façon avantageuse, l'étape de sélection met en oeuvre un algorithme permettant le traitement des données de l'entrepôt de données par tronçons de colonnes, et les étapes d'échantillonnage et d'indexation mettent en oeuvre des algorithmes permettant le traitement des données de l'entrepôt de données par tronçons de lignes.

L'invention concerne également un produit programme d'ordinateur téléchargeable depuis un réseau de communication et/ou enregistré sur un support lisible par ordinateur et/ou exécutable par un processeur. Ce produit programme d'ordinateur comprend des instructions de code de programme pour l'exécution des étapes du procédé précité selon l'invention, lorsque ledit programme est exécuté sur un ordinateur.

L'invention concerne aussi un dispositif de construction et d'utilisation d'une table de profils réduits de parangons, permettant de résumer une table de profils d'un ensemble d'individus, tous les profils étant définis par un même ensemble d'indicateurs, le profil d'un individu donné comprenant des valeurs pour ledit ensemble d'indicateurs qui sont propres audit individu donné, ledit dispositif comprenant :
- des moyens de sélection, permettant de sélectionner parmi l'ensemble d'indicateurs un sous-ensemble d'indicateurs définissant des profils réduits d'individus, le profil réduit d'un individu donné comprenant des valeurs pour ledit sous-ensemble d'indicateurs qui sont propres audit individu donné et obtenues à partir des données d'un entrepôt de données ;
- des moyens d'échantillonnage de l'ensemble d'individus, permettant d'obtenir un échantillon d'individus appelés parangons ;
- des moyens d'obtention d'une table de profils réduits de parangons, comprenant pour chacun des parangons un profil réduit spécifique audit parangon ; et
- des moyens d'indexation de tous les individus sur les parangons, permettant d'obtenir un index reliant chaque individu à au moins un parangon dont le profil réduit est le plus proche du profil réduit dudit individu, de façon que le contenu de la table de profils réduits de parangons puisse être utilisé pour tous les individus.

### 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un organigramme d'un mode de réalisation particulier du procédé selon l'invention de construction et d'utilisation d'une table de profils réduits de parangons ;
- la figure 2 présente une architecture fonctionnelle illustrant l'application du procédé selon l'invention à l'analyse de données clients ;
- la figure 3 illustre le principe de construction d'une table de profils réduits de parangons selon l'invention ;
- la figure 4 présente une architecture des traitements effectués selon l'invention pour construire une table de profils réduits de parangons ; et
- la figure 5 présente la structure d'un dispositif selon l'invention, permettant de construire et utiliser une table de profils réduits de parangons.

### 6. Description détaillée

L'invention concerne donc un procédé de construction et d'utilisation d'une table de profils réduits de parangons, permettant de résumer une table de profils d'un ensemble d'individus.

Tous les profils sont définis par un même ensemble d'indicateurs. Le profil d'un individu donné comprend des valeurs pour l'ensemble d'indicateurs qui sont propres à cet individu donné.

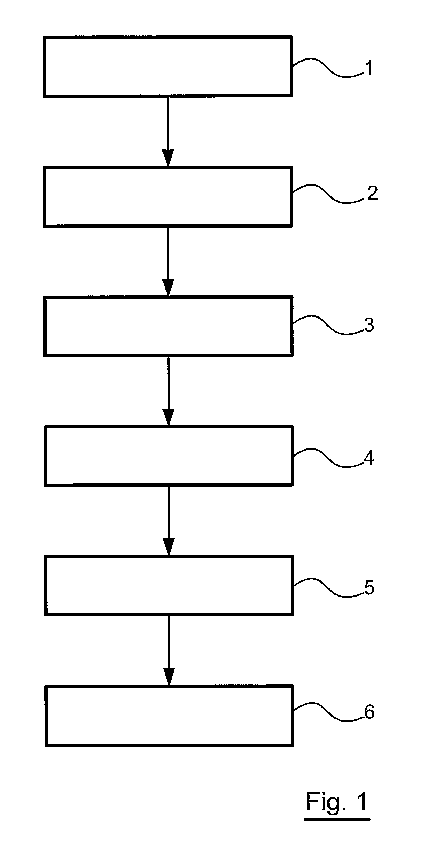

Comme illustré par la **figure 1,** dans un mode de réalisation particulier, le procédé selon l'invention comprend les étapes suivantes :
- sélection (1) parmi l'ensemble d'indicateurs d'un sous-ensemble d'indicateurs définissant des profils réduits d'individus, le profil réduit (aussi appelé signature) d'un individu donné comprenant, pour le sous-ensemble d'indicateurs, des valeurs qui sont propres à cet individu donné et obtenues à partir des données d'un entrepôt de données ;
- échantillonnage (2) de l'ensemble d'individus, permettant d'obtenir un échantillon d'individus appelés parangons ;
- obtention (3) d'une table de profils réduits de parangons, comprenant pour chacun des parangons un profil réduit spécifique à ce parangon ;
- indexation (4) de tous les individus sur les parangons, permettant d'obtenir un index reliant chaque individu à au moins un parangon dont le profil réduit est le plus proche du profil réduit de cet individu. Ainsi, le contenu de la table de profils réduits de parangons puisse être utilisé pour tous les individus ;
- construction (5) d'au moins un modèle d'analyse basé sur la table de profils réduits de parangons ; et
- déploiement (6) du modèle d'analyse, par obtention de scores et/ou segments pour les parangons, à partir de la table de profils réduits de parangons, puis généralisation à tous les individus des scores et/ou segments obtenus pour les parangons, grâce à l'index précité.

Dans la suite de la description, on suppose à titre d'exemple que les individus sont des clients et la constitution d'une table de profils réduits de parangons est appliquée à l'analyse de données clients. Il est clair cependant que l'invention s'applique également à tout autre type d'individu (produit, communication, transaction, adresse IP, etc).

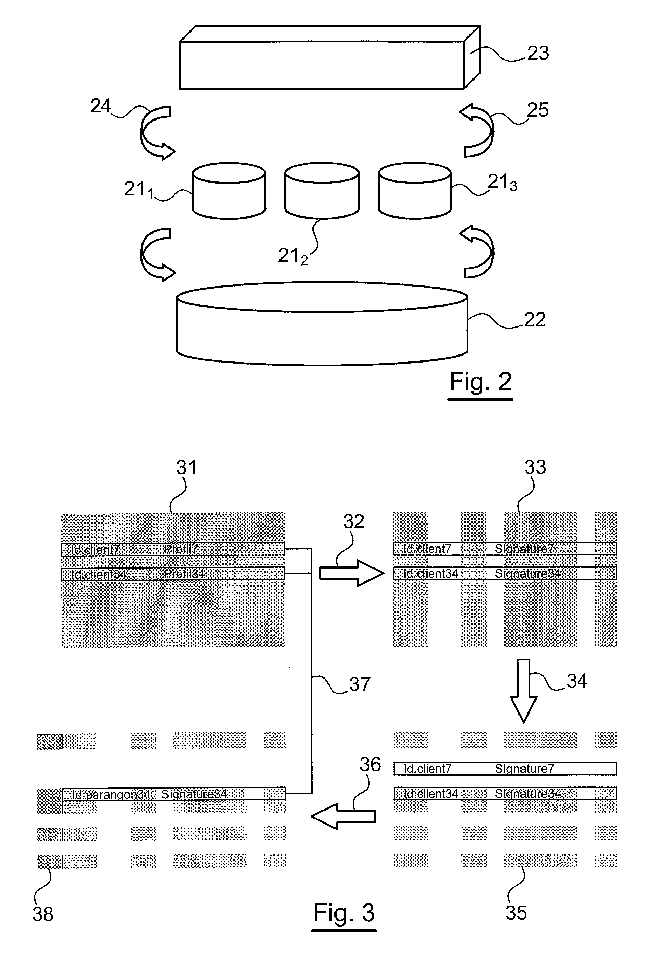

La **figure 2** présente une architecture fonctionnelle illustrant l'application du procédé selon l'invention à une telle analyse de données clients.

Une table de profils réduits de parangons (aussi appelée base de parangons) est construite par application métier, en résumant les informations de détails contenues dans l'entrepôt de données grand public 22. Sur la figure 2, trois bases de parangons (référencées 21₁, 21₂ et 21₃) sont construites, par exemple pour les applications métiers suivantes : fidélisation, appétence ADSL, fraude...

Le bloc applicatif (référencé 23) permet de produire des scores et de les exploiter opérationnellement. Les outils de data mining, de reporting ou de gestion de campagne constituent le bloc applicatif. Le bloc applicatif 23 est connecté aux bases de parangons 21₁, 21₂ et 21₃ (datamarts résumés), qui constituent sa source d'information.

Le bloc applicatif 23 transmet un objectif (référencé 24) sous la forme d'une variable calculée ou évaluée sur un sous échantillon de la population. Cette variable cible correspond à un objectif métier. Par exemple pour une campagne marketing visant à placer une offre, on aura stimulé un échantillon de la population pour déterminer son appétence à cette offre. Le bloc applicatif transmet alors la liste des valeurs de l'appétence à cette offre sur l'échantillon.

Le bloc applicatif 23 construit un modèle produisant les scores sur l'échantillon où la variable objectif est connue. Le modèle est ensuite appliqué sur les parangons. L'index reliant les parangons à tous les individus de l'entrepôt de données permet de récupérer les scores (référencés 25) de tous les individus. De la même manière, le bloc applicatif 23 peut réaliser une requête sur la base de parangons pour faire une sélection sur tous les clients de l'entrepôt de données.

Le fait que les datamarts soient résumés est totalement transparent pour le bloc applicatif.

La volumétrie de l'entrepôt de données 22 est par exemple de l'ordre de 100 Téra octets. Avec la technique de l'art antérieur, la volumétrie potentielle d'une table de profils de tous les individus construite à partir de l'information de détails atteint 10 Téra octets. L'utilisation de la technologie selon l'invention de résumé de table permet de réduire à 10 % le nombre de colonnes, et à 1 % le nombre de lignes. Si bien que pour la même utilisation des tables de profils, l'invention permet d'obtenir une volumétrie de 10 Giga octets au lieu de 10 Téra octets.

La **figure 3** illustre le principe de construction d'une table de profils réduits de parangons selon l'invention.

Dans le quart supérieur gauche de la figure 3, on a représenté une table de profils de tous les clients 31, chaque ligne étant spécifique à un client donné et comprenant notamment son identifiant et tous les indicateurs de son profil (par exemple Id-client7 et profi17 pour le client de la ligne 7 et Id-client34 et profi134 pour le client de la ligne 34). on rappelle que l'invention permet de résumer cette table de profils de tous les clients 31, sans la calculer.

La flèche référencée 32 symbolise l'étape (référencée 1 sur la figure 1) de sélection d'un sous-ensemble d'indicateurs définissant des profils réduits d'individus (aussi appelés signatures). La pertinence de chaque indicateur du profil est par exemple calculée en fonction d'un indicateur cible (aussi appelé variable objectif) et les meilleurs indicateurs sont sélectionnés pour constituer les signatures. Selon une variante, le sous-ensemble d'indicateurs sélectionnés est une liste préétablie d'indicateurs, résultant d'une sélection de métier.

Le quart supérieur droit de la figure 3 représente la table de profils réduits (ou signatures) de tous les individus 33 résultant de l'exécution de l'étape de sélection précitée. Les indicateurs sélectionnés apparaissent en grisés et les autres en blanc.

La flèche référencée 34 symbolise l'étape (référencée 2 sur la figure 1) d'échantillonnage de l'ensemble d'individus, permettant d'obtenir un échantillon d'individus appelés parangons.

Le quart inférieur droit de la figure 3 représente la table de profils réduits (ou signatures) de parangons 35 résultant de l'exécution de l'étape d'échantillonnage précitée. Les lignes spécifiques aux parangons (membres de l'échantillon) apparaissent en grisés et les autres en blanc. Ainsi, pour poursuivre l'exemple précité, on suppose que le client de la ligne 34 est un parangon, tandis que le client de la ligne 7 n'en est pas un.

La flèche référencée 36 symbolise l'étape (référencée 3 sur la figure 1) d'indexation (4) de tous les individus sur les parangons.

Le quart inférieur gauche de la figure 3 illustre cette indexation. Par exemple, comme symbolisé par la flèche référencée 37, les clients des lignes 7 et 34 sont tous les deux indexés sur le client de la ligne 34, qui est un parangon.

Les modèles sont construits et appliqués sur la table des profils réduits de parangons. Le déploiement de chaque modèle permet par exemple l'obtention de scores pour les parangons. Sur le quart inférieur gauche de la figure 3, ces scores sont représentés par la colonne supplémentaire 38, apposée devant la table de profils réduits de parangons 35. Comme tous les individus sont indexés sur les parangons, le déploiement des modèles consiste en une simple jointure. Dans l'exemple précité, on associe au client de la ligne 7 le score du parangon de la ligne 34, sur lequel il est indexé.

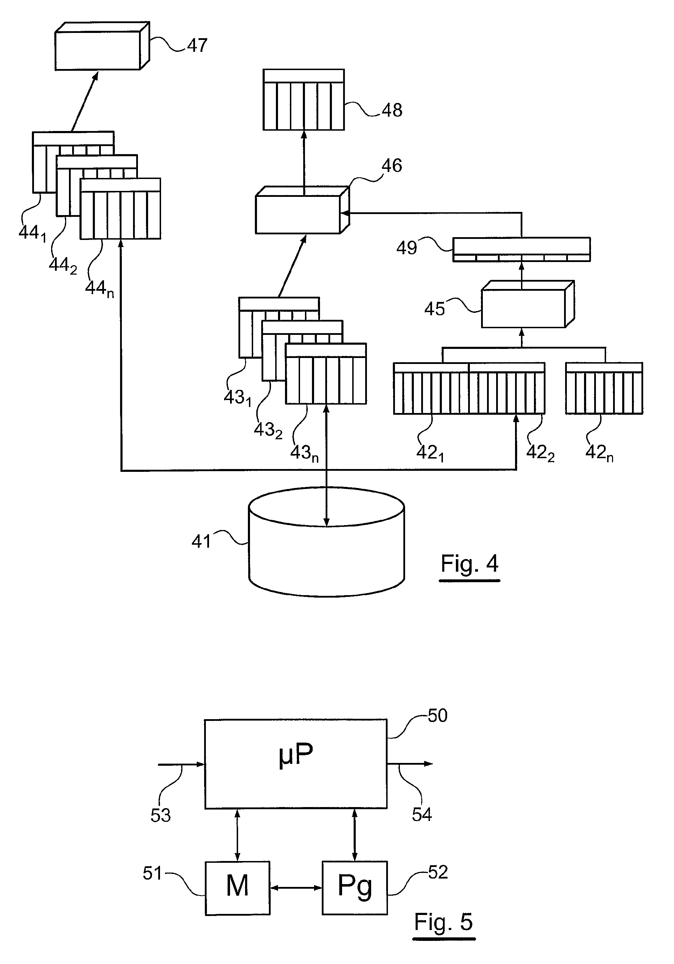

On présente maintenant, en relation avec la **figure 4,** une architecture des traitements effectués selon l'invention pour construire une table de profils réduits de parangons.

Afin de rendre possible la mise en oeuvre de la table de profils réduits de parangons dans une très grande volumétrie, on utilise par exemple des algorithmes permettant le traitement de l'information (c'est-à-dire des données de l'entrepôt de données 41) par tronçons de colonnes 42₁ à 42ₙ, pour l'étape de sélection d'indicateurs (référencée 45), et par tronçons de lignes 43₁ à 43ₙ et 44₁ à 44ₙ respectivement, pour l'étape d'échantillonnage (référencée 46) et l'étape d'indexation (référencée 47).

La table référencée 49 représente le sous-ensemble d'indicateurs sélectionnés résultant de l'exécution de l'étape de sélection 45. La table de profils réduits de parangons 48 est obtenue après exécution de l'étape d'échantillonnage 46, en fonction du sous-ensemble d'indicateurs sélectionnés 49. La table de profils réduits de parangons 48 est ensuite utilisée lors de l'étape d'indexation 47.

On présente maintenant plus en détail un exemple de réalisation de l'étape de sélection d'indicateurs (référencée 1 sur la figure 1, 32 sur la figure 3 et 45 sur la figure 4).

Pour sélectionner les indicateurs, on construit un premier échantillon aléatoire des clients. Sur cet échantillon de clients, on construit par exemple de l'ordre de 10 000 variables (indicateurs) calculées à partir des données de détails de l'entrepôt de données. On utilise par exemple l'algorithme MODL pour discrétiser et fournir l'importance de chaque variable prise indépendamment en fonction d'une variable objectif. D'autres algorithmes de sélection peuvent bien sûr être utilisés.

L'algorithme MODL est décrit en détail dans les documents suivants:
- « Boullé, M.: A Bayesian Approach for Supervised Discretization, Data Mining V, Eds Zanasi, Ebecken, Brebbia, WIT Press, (2004) 199-208 »;
- « Boullé, M.: A Grouping Method for Categorical Attributes Having Very Large Number of Values, Proceeding of the Fourth International Conference on Machine Learning and Data Mining in Pattern Recognition, (2005) 228-242 ».

Cette méthode de sélection et discrétisation des attributs présente de bonnes performances et une faible complexité : en o(m n log(n)), où m est le nombre d'attributs et n le nombre d'instances.

L'étape de sélection d'indicateurs produit en sortie:
- M indicateurs discrétisés binaires (M de l'ordre de 1000 par exemple)
- Pour chaque indicateur Aᵢ, sa formule de calcul F(Aᵢ).
- Pour chaque indicateur Aᵢ, son importance I(Aᵢ)
- Pour chaque indicateur Aᵢ, son support Si sur l'ensemble S.

On présente maintenant plus en détail un exemple de réalisation de l'étape d'échantillonnage d'individus (référencée 2 sur la figure 1, 34 sur la figure 3 et 46 sur la figure 4), c'est-à-dire de sélection des parangons.

L'étape de sélection des parangons est cruciale. Une base de parangons peu représentative des clients pourrait conduire à la construction de scores totalement inefficaces sur l'ensemble de la population. A contrario, une base de parangons de très grande taille diminuerait sensiblement l'intérêt de l'utilisation des technologies de résumés. Il convient donc gérer au mieux le compromis entre la réduction de volumétrie et la représentativité de la base.

L'étape précédente, la sélection des colonnes (sélection des indicateurs), permet de repérer les variables intéressantes pour un objectif fixé. Il est naturel d'utiliser cette information pour construire un échantillon représentatif.

En plus du critère de représentativité, on prend en compte la complexité algorithmique afin de rester dans des temps de calcul acceptables.

C'est pourquoi on utilise par exemple l'algorithme Ease pour construire en une seule passe l'échantillon satisfaisant le critère de représentativité.

L'algorithme Ease est décrit dans le document suivant : « Efficient Data reduction with Ease, H. Brönniman, B. Chen, M. Dash, P. Haas, P. Scheuermann, proceedings of SIGKDD'03, August 24-27, 2003 ».

On présente maintenant plus en détail un exemple de réalisation de l'étape d'indexation (référencée 4 sur la figure 1, 36 sur la figure 3 et 47 sur la figure 4).

La représentativité de l'échantillon sera d'autant meilleure qu'on utilisera plus de parangons. Le recours à des techniques issues du "stream-mining" permettra une indexation approchée efficace même face à un très grand nombre de parangons. Ces techniques permettent de maîtriser le compromis entre la précision souhaitée sur le résultat et les ressources (temps, mémoire) allouées à l'algorithme. Rappelons qu'à la différence d'un entrepôt de données (data warehouse) qui archive les données, un mini-entrepôt (« datamart ») (résumé) ne sert qu'à des analyses statistiques et peut parfaitement supporter un certain degré d'approximation.

Pour ces raisons, on choisit comme mode de réalisation préféré l'algorithme LSH, qui fournit une approximation de l'algorithme des k plus proches voisins. L'algorithme LSH est décrit dans le document suivant : « Similarity Search in High Dimensions via Hashing, A. Gionis, P. Indyk, R. Motwani, proceedings of the 25 VLDB Conference, Edinburgh, Scotland, 1999 ».

Pour retrouver le plus proche voisin d'un vecteur p, l'algorithme LSH utilise L tables de hachage de M blocs contenant au plus B vecteurs. Chaque table de hachage représente une sélection de dimension du vecteur p (pour la construction des tables de hachage, voir le document précité décrivant l'algorithme Ease). Les candidats à être le plus proche voisin du vecteur p sont les vecteurs contenus dans chacune des L cases correspondant au L hachages du vecteur p. Une recherche exhaustive est faite pour ces candidats pour déterminer le plus ou les k plus proches voisins.

Le point critique pour la présente application est que pour déterminer le parangon le plus proche d'un client donné, il est nécessaire de faire une série de LxB accès "aléatoires" à la table des profils réduits de parangons. Dans une implémentation particulière, cette table tient en mémoire vive. Dans le cas contraire, LxB accès disques seraient nécessaires ce qui rendraient prohibitifs les temps de traitements.

L'étape d'indexation produit en sortie un index permettant de relier chaque client à k parangons. Ainsi, tous les calculs effectués sur la table réduite des parangons sont transposables à tous les clients de l'entrepôt de données.

Par exemple, on attribue à un individu donné le score du parangon le plus proche auquel il est indexé. Si un individu donné est indexé sur plusieurs parangons, on lui attribue un score obtenu selon une politique de décision déterminée (par exemple, on prend le score le plus attribué parmi les scores des parangons concernés, ou bien une moyenne des scores des parangons concernés).

La **figure 5** présente la structure d'un dispositif selon l'invention, permettant de construire et utiliser une table de profils réduits de parangons. Ce dispositif comprend une mémoire M 51, et une unité de traitement 50 équipée d'un microprocesseur µP, qui est piloté par un programme d'ordinateur Pg 52. L'unité de traitement 50 reçoit en entrée les données 53 d'un entrepôt de données, que le microprocesseur µP traite, selon les instructions du programme Pg 52, pour générer une table de profils réduits de parangons 54, et sur la base de celle-ci construire des modèles et les déployer.

## Revendications

1. Procédé de construction et d'utilisation d'une table de profils réduits de parangons (21₁, 21₂, 21₃ ; 48), permettant de résumer une table de profils d'un ensemble d'individus, tous les profils étant définis par un même ensemble d'indicateurs, le profil d'un individu donné comprenant des valeurs pour ledit ensemble d'indicateurs qui sont propres audit individu donné, ledit procédé comprenant les étapes suivantes :
- sélection (1 ; 32 ; 45) parmi l'ensemble d'indicateurs d'un sous-ensemble d'indicateurs définissant des profils réduits d'individus, le profil réduit d'un individu donné comprenant des valeurs pour ledit sous-ensemble d'indicateurs qui sont propres audit individu donné et obtenues à partir des données d'un entrepôt de données ;
- échantillonnage (2 ; 34 ; 46) de l'ensemble d'individus, permettant d'obtenir un échantillon d'individus appelés parangons ;
- obtention (3) d'une table de profils réduits de parangons, comprenant pour chacun des parangons un profil réduit spécifique audit parangon ; et
- indexation (4 ; 36 ; 47) de tous les individus sur les parangons, permettant d'obtenir un index reliant chaque individu à au moins un parangon dont le profil réduit est le plus proche du profil réduit dudit individu, de façon que le contenu de la table de profils réduits de parangons puisse être utilisé pour tous les individus.

2. Procédé selon la revendication 1, **caractérisé en ce que** l'étape d'échantillonnage (2 ; 34 ; 46) est effectuée en fonction du résultat de l'étape de sélection, de façon que les parangons soient représentatifs de tous les individus sur ledit sous-ensemble d'indicateurs.

3. Procédé selon l'une quelconque des revendications 1 et 2, **caractérisé en ce que** l'étape de sélection (1 ; 32 ; 45) d'un sous-ensemble d'indicateurs comprend une étape d'obtention d'une liste prédéterminée d'indicateurs présélectionnés.

4. Procédé selon l'une quelconque des revendications 1 et 2, **caractérisé en ce que** l'étape de sélection (1 ; 32 ; 45) d'un sous-ensemble d'indicateurs comprend une étape de calcul du sous-ensemble d'indicateurs en fonction d'au moins un indicateur cible déterminé.

5. Procédé selon l'une quelconque des revendications 1 à 4, **caractérisé en ce qu'**il comprend en outre une étape (5) de construction d'au moins un modèle d'analyse basé sur la table de profils réduits de parangons.

6. Procédé selon l'une quelconque des revendications 1 à 5, **caractérisé en ce qu'**il comprend en outre une étape (6) de déploiement d'un modèle d'analyse, comprenant elle-même les étapes suivantes :
- obtention de scores et/ou segments pour les parangons, à partir de la table de profils réduits de parangons ;
- généralisation à tous les individus des scores et/ou segments obtenus pour les parangons, grâce audit index.

7. Procédé selon l'une quelconque des revendications 1 à 6, **caractérisé en ce que** l'étape de sélection met en oeuvre un algorithme permettant le traitement des données de l'entrepôt de données par tronçons de colonnes, et **en ce que** les étapes d'échantillonnage et d'indexation mettent en oeuvre des algorithmes permettant le traitement des données de l'entrepôt de données par tronçons de lignes.

8. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé selon l'une quelconque des revendications 1 à 7, lorsque ledit programme est exécuté sur un ordinateur.

9. Dispositif de construction et d'utilisation d'une table de profils réduits de parangons (21₁, 21₂, 21₃ ; 48), permettant de résumer une table de profils d'un ensemble d'individus, tous les profils étant définis par un même ensemble d'indicateurs, le profil d'un individu donné comprenant des valeurs pour ledit ensemble d'indicateurs qui sont propres audit individu donné, ledit dispositif (50, 51, 52) comprenant :
- des moyens de sélection, permettant de sélectionner parmi l'ensemble d'indicateurs un sous-ensemble d'indicateurs définissant des profils réduits d'individus, le profil réduit d'un individu donné comprenant des valeurs pour ledit sous-ensemble d'indicateurs qui sont propres audit individu donné et obtenues à partir des données d'un entrepôt de données ;
- des moyens d'échantillonnage de l'ensemble d'individus, permettant d'obtenir un échantillon d'individus appelés parangons ;
- des moyens d'obtention d'une table de profils réduits de parangons, comprenant pour chacun des parangons un profil réduit spécifique audit parangon ; et
- des moyens d'indexation de tous les individus sur les parangons, permettant d'obtenir un index reliant chaque individu à au moins un parangon dont le profil réduit est le plus proche du profil réduit dudit individu, de façon que le contenu de la table de profils réduits de parangons puisse être utilisé pour tous les individus.
